# EUROPEAN PATENT SPECIFICATION

(11) **EP 4 160 000 B1**
(45) Date of publication and mention of the grant of the patent: **08.11.2023**
(21) Application number: 21200125.9
(22) Date of filing: 30.09.2021
(51) Int. Cl.: F02M 35/10, F02M 35/104, F02B 29/04

(54) **INTAKE-MANIFOLD SYSTEM FOR AN INTERNAL COMBUSTION ENGINE**
EINLASSKRÜMMERSYSTEM FÜR EINE BRENNKRAFTMASCHINE
UNITÉ DE COLLECTEUR D'ADMISSION POUR MOTEUR À COMBUSTION INTERNE

(43) Date of publication of application: 05.04.2023
(73) Proprietor: C.R.F. Società Consortile per Azioni, 10043 Orbassano (Torino) (IT)
(72) Inventor: CARCIOFFI, Mr. Carlo, I-41121 Modena (IT); CASELLA, Mr. Mauro, I-10043 Orbassano (Torino) (IT); MATTIELLO, Mr. Fabrizio, I-10043 Orbassano (Torino) (IT); PARADISO, Mr. Stefano, I-10135 Torino (IT); SANDRI, Mr. Silvano, I-10043 Orbassano (Torino) (IT)
(74) Representative: Notaro, Giancarlo

(56) References cited:
- WO-A1-2017/052798
- US-A1- 2003 131 831
- US-A1- 2018 187 984
- US-A1- 2020 018 270
- US-B2- 8 286 615

## Description

### Field of the invention

The present invention relates to intake-manifold systems for internal-combustion engines, in particular motor-vehicle engines, of the type including:
- a heat exchanger for cooling the air at inlet to the engine using a coolant;
- an intake manifold, in communication with an air-inlet end of the heat exchanger, for supplying a flow of air to said air-inlet end of the heat exchanger; and
- an outlet manifold, in communication with an air-outlet end of the heat exchanger and including a plurality of branches that are to supply air to respective engine cylinders.

### Prior art

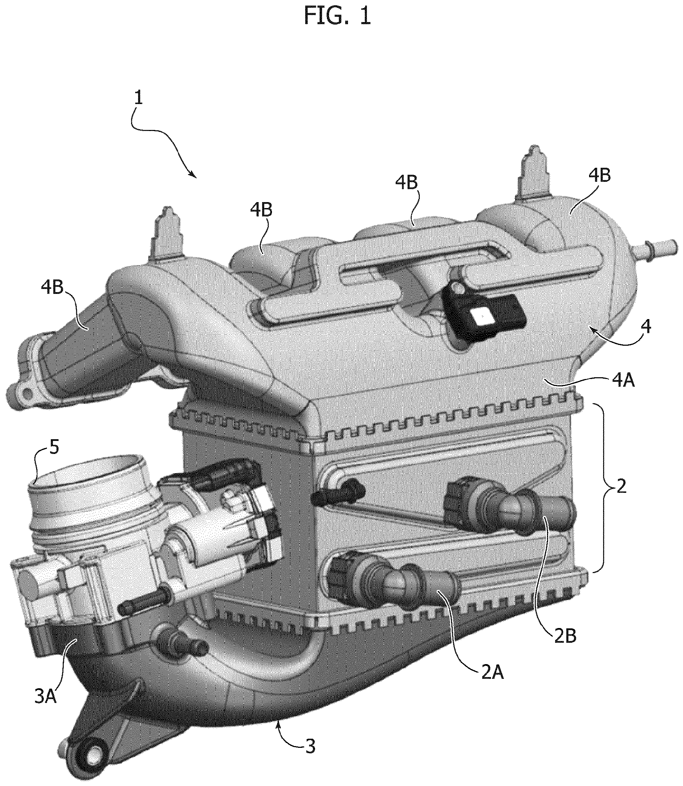

Figure 1 of the annexed drawings shows an intake-manifold system according to the prior art. The reference number 1 designates as a whole the intake-manifold system, comprising a heat exchanger 2 of a conventional type, with an inlet 2A and an outlet 2B for the coolant, which typically is the liquid for cooling the internal-combustion engine, which circulates in a secondary circuit of the cooling system of the internal-combustion engine. The body of the heat exchanger 2 has opposite end faces (the bottom face and the top face as viewed in the drawing) for inlet and outlet of a flow of air for supply of the engine.

Particularly in the case, for example, of am engine with turbosupercharger, the flow of superheated air supplied by the supercharger is cooled in the heat exchanger 2 to a temperature of around 45-55°C in order to increase the power of the engine and reduce the amount of nitrogen oxides in the exhaust gases.

According to the conventional technique, the heat exchanger 2 may for example be of the plate type, for instance with a plurality of flattened tubes for passage of the coolant, which are set alongside, and at a distance from, one another in such a way as to define passages for the flow of air of supply of the engine. The material constituting the body of the heat exchanger 2 is a metal material, for example aluminium or copper.

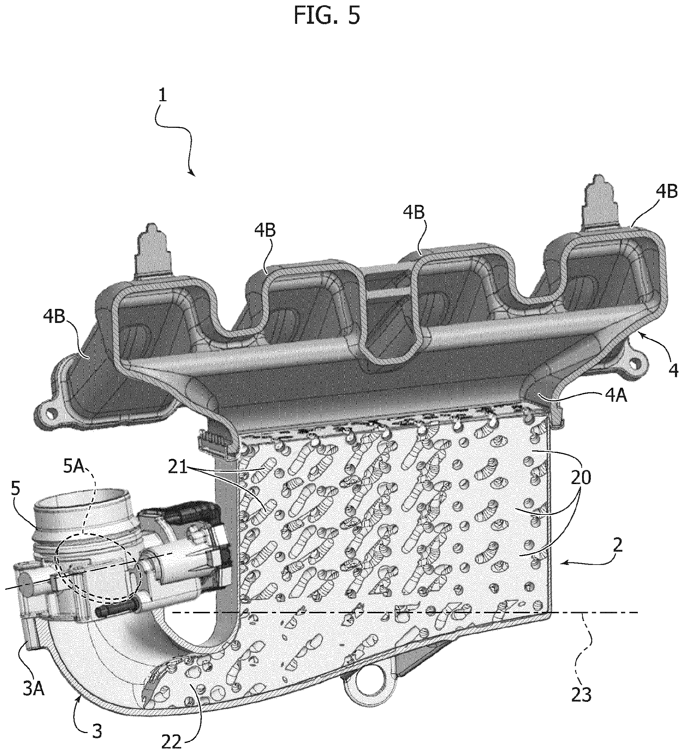

The air-inlet end of the heat exchanger 2 is rigidly coupled to one end of the hollow body of an intake manifold 3. The upstream end (with reference to the direction of the flow of air) of the intake manifold 3 defines a tubular portion 3A that is to receive the flow of air supplied by a supercharger of the engine. Also illustrated in Figure 1 is a tubular body 5 containing the butterfly valve 5A of the engine (visible in Figure 5), which is associated to the inlet end 3A of the intake manifold 3.

Once again with reference to Figure 1, the air-outlet end of the heat exchanger 2 is rigidly coupled to an outlet manifold 4 having a hollow body with a mouth 4A coupled to the outlet end of the heat exchanger 2 and, on the downstream side (with reference to the direction of the flow of air) a plurality of tubular branches 4B that are to supply the flow of air to respective cylinders of the engine.

Intake-manifold systems of the type referred to above are, for example, described in US 8,286,615 B2 and US 9, 982,589 B2.

In the general field of heat exchangers, it is also known to manufacture the heat exchanger housing together with a complex of labyrinths of passages as a single unitary piece, by additive manufacturing (see WO 2017/052798 A1 and US 2018/187984 A1).

An intake manifold system for an internal combustion engine, including a heat exchanger in a one-piece construction with the intake manifold is also known from US 2020/018270 A1.

### Object of the invention

The object of the present invention is to provide an intake-manifold system of the type referred to above that, for a given size of the heat exchanger, will enable increase in its efficiency, or alternatively will enable reduction of the size of the heat exchanger, without any alteration in the efficiency.

A further object of the invention is to provide an intake-manifold system of the type referred to above that will prove simpler and lighter as compared to systems of the prior art.

Yet a further object of the invention is to provide an intake-manifold system of the type referred to above that will envisage a smaller number of components and that will consequently enable simplification and acceleration of the assembly operations.

A further object of the invention is to provide a manifold system of the type referred to above in which the risk of seepage of air is ruled out.

According to a further aspect, a more general object of the invention is to identify a new and advantageous configuration of heat exchanger, which can be used for any heat exchanger in a motor vehicle, both in the case of a motor vehicle with thermal engine and in the case of a hybrid vehicle or electric vehicle.

### Summary of the invention

With a view to achieving these and further objects, according to a first aspect the subject of the invention is an intake-manifold system according to claim 1.

Thanks to the aforesaid characteristics, the intake-manifold system according to the invention is able to afford various advantages. In the first place, production of the heat exchanger using an additive-manufacturing technology enables the configuration described above to be obtained, with labyrinths of passages for the air and the coolant, which leads to higher heat-exchange efficiency given the same volume occupied by the heat exchanger. This advantage is enhanced by the fact that, since the body of the intake manifold is made of a single piece with the body of the heat exchanger, the volume occupied by the intake manifold can in part also be used to increase inside it the volume occupied by the labyrinths of passages for the air and the coolant, which further increases the heat-exchange efficiency for one and the same volume occupied by the heat exchanger and by the intake manifold. Another advantage deriving from the invention lies in the fact that any risk of seepage of air at the inlet of the heat exchanger is eliminated given that no joints are provided between the air-inlet end of the heat exchanger and the intake manifold. Moreover, the system has in this way a smaller number of components, which simplifies and accelerates the assembly operations.

In an example of embodiment, the body of the heat exchanger is formed with a wall in the form of a triply periodic minimal surface of the gyroid type, according to the definition known from the technical literature, for example from Screen, Alan H. (May, 1970) "Infinite periodic minimal surfaces without self-intersections" - Technical report - NASA Technical Note D-5541*,* or else from Hoffman, David (June 25 to July 27, 2001) "Computing Minimal Surfaces", Global Theory of Minimal Surfaces - Proceedings of the Clay Mathematics Institute, Berkeley, California, Mathematical Sciences Research Institute - ISBN 9780821835876-OCLC LC 57134637).

As mentioned, this solution constitutes just one example. The geometry of the body of the exchanger may be any of the geometries of the type designed to define the aforesaid complex of labyrinths of passages, which can be obtained with additive-manufacturing technology, such as the lattice structure, i.e., a network or mesh of tubular elements or surfaces of the airfoil type. Thanks to additive-manufacturing technology it is also possible to envisage that the body of the heat exchanger will define passages or channels that have a shape and/or geometry that vary/varies along the longitudinal dimension of each passage to optimize in a gradual and calibrated way heat exchange along the intake manifold and the heat exchanger and along a possible heat exchanger located in the outlet manifold. For instance, the thickness of the walls of the passages may vary along the longitudinal dimension of each passage.

In the invention, also the outlet manifold of the intake-manifold system is made of a single piece with the body of the heat exchanger and with the body of the intake manifold, which rules out altogether the risk of any seepage of air and further simplifies the assembly operations.

Still according to the invention, within the outlet manifold or upstream thereof (but downstream of the aforesaid heat exchanger) a further heat exchanger is provided that operates with a different coolant (or the same coolant but at a different thermal level), consisting of a body made of a single piece with said outlet manifold, with the main heat exchanger, and with the intake manifold, to increase further the efficiency of the system by making the whole system of a single piece.

### Detailed description of an embodiment

Further characteristics and advantages of the invention will emerge from the ensuing description with reference to the annexed drawings, which are provided purely by way of non-limiting example and in which:
- Figure 1 is a perspective view of an intake-manifold system according to the prior art;
- Figure 2 is a perspective view of an intake-manifold system showing some characteristics of the invention;
- Figure 3 is a cross-sectional view of the heat exchanger and of the intake manifold forming part of the system illustrated in Figure 2;
- Figure 4 is a sectioned perspective view at an enlarged scale of a detail of the body of the heat exchanger; and
- Figure 5 is a further sectioned perspective view of the intake-manifold system illustrated in Figure 2.

Figure 1 illustrates an intake-manifold system according to the prior art, as already described above.

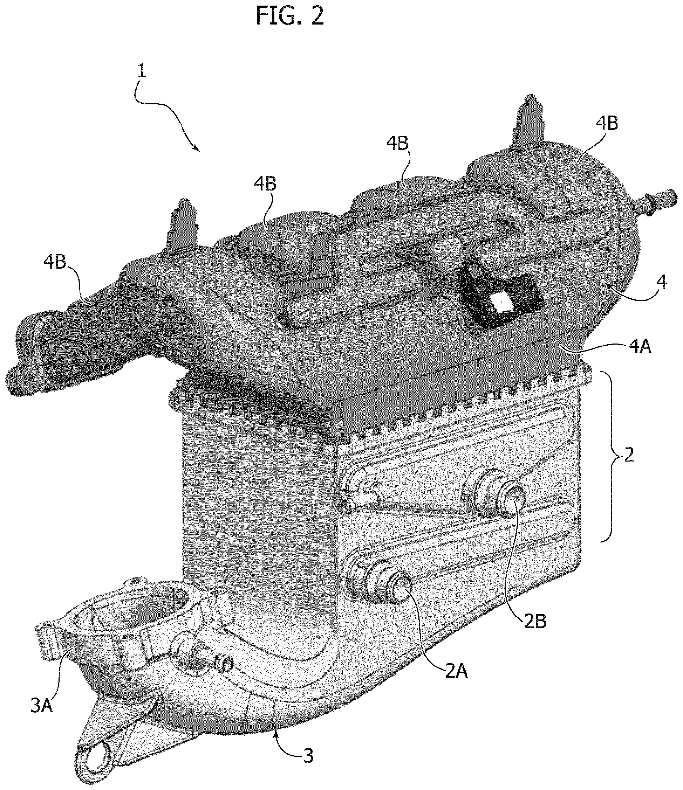

In Figures 2-5, the parts in common with the ones represented in Figure 1 are designated by the same references.

With reference to Figure 2, the main characteristic of the present invention lies in the fact that the body of the heat exchanger 2 and the body of the intake manifold 3 are made of a single piece, for example of metal material, in particular aluminium or copper, or plastic material, or a composite material (including a synthetic fibre-reinforced matrix), or high-conductivity plastic material (including metal powders), using additive-manufacturing technology.

As already mentioned above, various additive-manufacturing techniques have been known for some time now that enable a three-dimensional body to be obtained starting from a 3D CAD model, by addition, for example, of metal powders and simultaneous supply of laser radiation to form the product layer by layer.

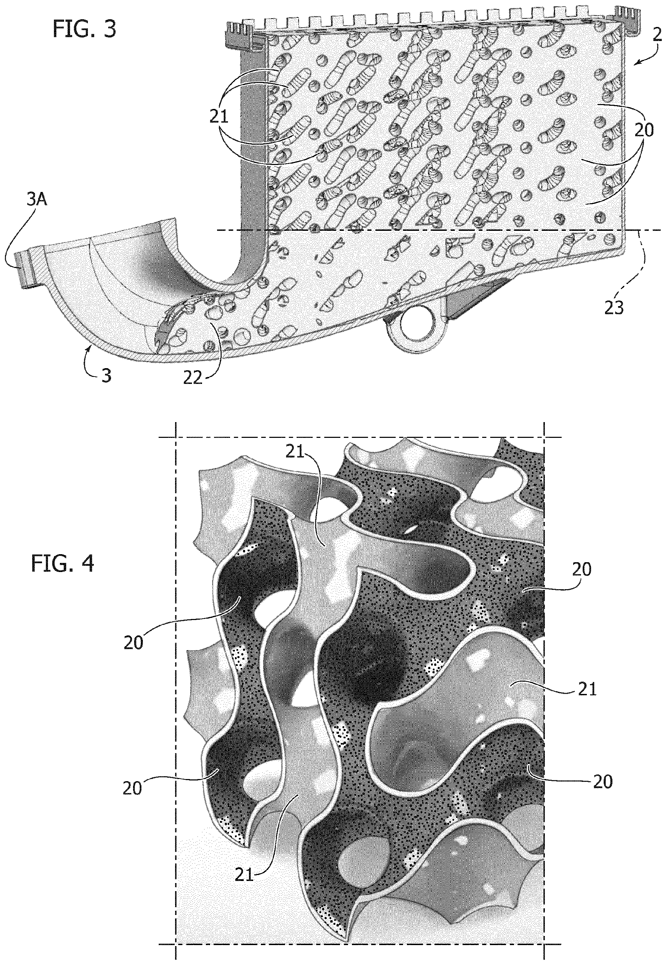

In the case of the present invention, the above technique is used to configure the body of the heat exchanger 2 in the form of a complex of labyrinths of passages 20, 21 for the air for supply of the engine and for the coolant, respectively. Figure 4 shows a sectioned portion of the body of the heat exchanger, at an enlarged scale and in perspective view. The passages the walls of which are represented as spotted surfaces are the passages 20 for the air, whereas the passages the walls of which are represented as lighter surfaces, are the surfaces 21 for the coolant.

In the preferred embodiment, the complex of labyrinths of passages 20, 21 is defined by a wall configured as triply periodic minimal surface of the gyroid type, according to the meaning known from the technical literature, namely, from the documents that have already been referred to above. This configuration has given proof of being optimal for obtaining the maximum heat-exchange efficiency between the air for supply of the engine and the coolant, for a given volume occupied by the heat exchanger 2.

As may be seen in particular in Figures 3 and 5, the technology mentioned above enables the volume occupied by the aforesaid complex of labyrinths of passages 20, 21 to be obtained also with a portion 22 that extends into a part of the hollow body of the intake manifold 3, upstream (with reference to the direction of the flow of air) of a theoretical plane 23 at the air-inlet end of the heat exchanger 2. Thanks to this characteristic, for a given volume of the heat exchanger 2 and of the intake manifold 3, a considerable increase in the heat-exchange efficiency is obtained as compared to the conventional solution. Furthermore, once again thanks to this characteristic, the system according to the invention can easily replace a conventional system of the type illustrated in Figure 1, without any modification of the volume occupied by the system, but with a drastic increase in the heat-exchange efficiency.

The example illustrated regards a liquid-cooled heat exchanger, which uses a liquid of the engine-cooling circuit, preferably of a secondary circuit of the engine-cooling system. However, it is also possible to make use of a heat exchanger of the phase-change type.

Of course, elimination of a joint between the inlet of the heat exchanger and the intake manifold 3 rules out the risk of seepage of air in this area. The number of the components making up the system is thus moreover smaller, which simplifies and accelerates the assembly operations.

According to the invention, also the body of the outlet manifold 4 is made of a single piece with the body of the heat exchanger 2 and with the body of the intake manifold 3, using additive manufacturing, which altogether rules out any risk of seepage of air.

As referred to above, the configuration and arrangement of the heat exchanger, with the intake manifold and outlet manifold associated thereto, can be applied both in the case of a motor vehicle with thermal engine and in the case of a hybrid vehicle.

## Claims

1. An intake-manifold system for an internal-combustion engine, including:
- a heat exchanger (2), for cooling the air at inlet to the engine with a coolant;
wherein said heat exchanger (2) has a body having:
- an inlet (2A) and an outlet (2B) for the coolant, and
- opposite ends for the inlet and the outlet of a flow of air to be supplied to the engine
- an intake manifold (3), defining a tubular portion (3A) in communication with the air-inlet end of the body of the heat exchanger (2), for supplying a flow of air to said air-inlet end of the body of the heat exchanger (2); and
- an outlet manifold, having a hollow body with a mouth (4A) in communication with the air-outlet end of the body of the heat exchanger (2) and including, on a downstream side thereof, with reference to the direction of the flow of air, a plurality of branches (4B) that are to supply air to respective cylinders of the engine,
said system being **characterized in that**:
- the heat exchanger (2) has a body made of a single piece obtained with additive-manufacturing technology and includes a complex of labyrinths of passages (20, 21) for the air and the coolant; and
- the body of the heat exchanger (2) is made of a single piece also with the body of said intake manifold (3), said labyrinths of passages (20, 21) for the air and the coolant having a portion (22) that extends into a part of said intake manifold (3) upstream, with reference to the direction of the flow of air, of a theoretical plane (23) at the inlet end of the heat exchanger (2),
so that the volume occupied by the intake manifold (3) is in part also used to increase inside it the volume occupied by the labyrinths of passages for both the air and the coolant, so as to increase the heat exchange,
wherein also said outlet manifold (4) has a body made of a single piece with the body of said heat exchanger (2), and
wherein within the outlet manifold (4) or upstream thereof, but downstream of the aforesaid heat exchanger (2), a further heat exchanger is provided that operates with a different coolant, or with the same fluid but at a different thermal level, consisting of a body made of a single piece with said outlet manifold, with the main heat exchanger (2), and with the intake manifold (3).

2. The intake-manifold system according to claim 1, **characterized in that** the body of the heat exchanger (2) has a configuration designed to define the aforesaid complex of labyrinths of passages (20, 21), in the form of a lattice or mesh configuration of tubular elements or of surfaces of the airfoil type, or in the form of a triply periodic surface of the gyroid type.

3. The intake-manifold system according to claim 1, **characterized in that** the aforesaid body made of a single piece of the heat exchanger (2) and of the intake manifold (3) is made of metal material, such as aluminium or copper, or of plastic material or of composite material, including a synthetic fibre-reinforced matrix, or plastic material including metal powders.

4. The intake-manifold system according to claim 2, **characterized in that** the body of the heat exchanger defines passages that have a shape and/or geometry that vary/varies along the longitudinal dimension of each passage, to optimize in a gradual and calibrated way heat exchange along the intake manifold (3) and the heat exchanger (2) and along each further heat exchanger.

5. The intake-manifold system according to claim 4, **characterized in that** the passages have walls the thickness of which varies along the longitudinal dimension of each passage.

6. Use of the intake-manifold system according to claim 1, **characterized in that** said heat exchanger (2) is cooled with a cooling liquid of the internal-combustion engine, which circulates in a secondary circuit of the cooling system of the internal-combustion engine.

7. Use of the intake-manifold system according to claim 1, **characterized in that** said heat exchanger (2) is cooled with a coolant that undergoes a phase change in the heat exchanger.

## Patentansprüche

1. Ansaugkrümmersystem für einen Verbrennungsmotor, umfassend:
- einen Wärmetauscher (2) zum Kühlen der Luft am Einlass des Motors mit einer Kühlflüssigkeit;
wobei der Wärmetauscher (2) einen Körper hat, aufweisend:
- einen Einlass (2A) und einen Auslass (2B) für die Kühlflüssigkeit, und
- entgegengesetzte Enden für den Einlass und den Auslass eines dem Motor zuzuführenden Luftstroms
- einen Ansaugkrümmer (3), der einen mit dem Lufteinlassende des Körpers des Wärmetauschers (2) in Verbindung stehenden röhrenförmigen Abschnitt (3A) für die Zufuhr eines Luftstroms zu dem Lufteinlassende des Körpers des Wärmetauschers (2) definiert; und
- einen Auslasskrümmer, der einen hohlen Körper mit einer mit dem Luftauslassende des Körpers des Wärmetauschers (2) in Verbindung stehenden Öffnung (4A) aufweist und auf einer, bezogen auf die Richtung des Luftstroms, stromabwärts davon gelegenen Seite eine Vielzahl von Abzweigen (4B) umfasst, die jeweiligen Zylindern des Motors Luft zuführen,
wobei das System **dadurch gekennzeichnet ist, dass**:
- der Wärmetauscher (2) einen Körper aufweist, der aus einem einzigen Stück besteht, das mit additiver Fertigungstechnik erhalten wird und einen Komplex aus Labyrinthen von Durchgängen (20, 21) für die Luft und die Kühlflüssigkeit umfasst; und
- der Körper des Wärmetauschers (2) auch mit dem Körper des Ansaugkrümmers (3) aus einem einzigen Stück gefertigt ist, wobei die Labyrinthe von Durchgängen (20, 21) für die Luft und die Kühlflüssigkeit einen Abschnitt (22) aufweisen, der sich in einen Teil des Ansaugkrümmers (3) stromaufwärts, bezogen auf die Richtung des Luftstroms, einer theoretischen Ebene (23) am Einlassende des Wärmetauschers (2) erstreckt,
sodass das vom Ansaugkrümmer (3) eingenommene Volumen zum Teil auch genutzt wird, um in ihm das von den Labyrinthen von Durchgängen eingenommene Volumen sowohl für die Luft als auch für die Kühlflüssigkeit zu vergrößern, um so den Wärmeaustausch zu erhöhen,
wobei auch der Auslasskrümmer (4) einen Körper aufweist, der mit dem Körper des Wärmetauschers (2) aus einem einzigen Stück gefertigt ist, und
wobei in dem Auslasskrümmer (4) oder stromaufwärts von ihm, aber stromabwärts des vorgenannten Wärmetauschers (2), ein weiterer Wärmetauscher vorgesehen ist, der mit einer anderen Kühlflüssigkeit oder mit derselben Flüssigkeit, aber auf einem anderen Wärmeniveau arbeitet, bestehend aus einem Körper, der mit dem Auslasskrümmer, dem Hauptwärmetauscher (2) und dem Ansaugkrümmer (3) aus einem einzigen Stück gefertigt ist.

2. Ansaugkrümmersystem nach Anspruch 1, **dadurch gekennzeichnet, dass** der Körper des Wärmetauschers (2) eine Ausgestaltung aufweist, die darauf ausgelegt ist, den vorgenannten Komplex aus Labyrinthen von Durchgängen (20, 21) in der Form einer Gitter- oder Netzkonfiguration von röhrenförmigen Elementen oder tragflächenartigen Oberflächen oder in der Form einer gyroidartigen dreifach periodischen Minimalfläche zu definieren.

3. Ansaugkrümmersystem nach Anspruch 1, **dadurch gekennzeichnet, dass** der vorgenannte Körper, der aus einem einzigen Stück aus dem Wärmetauscher (2) und dem Ansaugkrümmer (3) besteht, aus einem Metallmaterial, wie Aluminium oder Kupfer, oder aus einem Kunststoffmaterial oder einem Verbundwerkstoff, das bzw. der eine synthetische faserverstärkte Matrix umfasst, oder aus einem Kunststoffmaterial, das Metallpulver umfasst, gefertigt ist.

4. Ansaugkrümmersystem nach Anspruch 2, **dadurch gekennzeichnet, dass** der Körper des Wärmetauschers Durchgänge definiert, die eine Form und/oder Geometrie aufweisen, die entlang der Längendimension von jedem Durchgang variiert/variieren, um den Wärmeaustausch entlang des Ansaugkrümmers (3) und des Wärmetauschers (2) sowie entlang jedes weiteren Wärmetauschers graduell und kalibriert zu optimieren.

5. Ansaugkrümmersystem nach Anspruch 4, **dadurch gekennzeichnet, dass** die Durchgänge Wände aufweisen, deren Dicke entlang der Längendimension von jedem Durchgang variiert.

6. Verwendung des Ansaugkrümmersystems nach Anspruch 1, **dadurch gekennzeichnet, dass** der Wärmetauscher (2) mit einer Kühlflüssigkeit des Verbrennungsmotors gekühlt wird, die in einem Sekundärkreislauf des Kühlsystems des Verbrennungsmotors zirkuliert.

7. Verwendung des Ansaugkrümmersystems nach Anspruch 1, **dadurch gekennzeichnet, dass** der Wärmetauscher (2) mit einer Kühlflüssigkeit gekühlt wird, die im Wärmetauscher einen Phasenübergang durchläuft.

## Revendications

1. Système de collecteur d'admission pour un moteur à combustion interne, comprenant :
- un échangeur de chaleur (2), pour refroidir l'air à l'entrée du moteur avec un liquide de refroidissement ;
dans lequel ledit échangeur de chaleur (2) a un corps ayant :
- une entrée (2A) et une sortie (2B) pour le liquide de refroidissement, et
- des extrémités opposées pour l'entrée et la sortie d'un flux d'air à fournir au moteur
- un collecteur d'admission (3), définissant une portion tubulaire (3A) en communication avec l'extrémité d'entrée d'air du corps de l'échangeur de chaleur (2), pour fournir un flux d'air à ladite extrémité d'entrée d'air du corps de l'échangeur de chaleur (2) ; et
- un collecteur de sortie, ayant un corps creux avec une embouchure (4A) en communication avec l'extrémité de sortie d'air du corps de l'échangeur de chaleur (2) et comprenant, sur un côté aval de celui-ci, en référence à la direction du flux d'air, une pluralité de branches (4B) destinées à fournir de l'air à des cylindres respectifs du moteur,
ledit système étant **caractérisé en ce que** :
- l'échangeur de chaleur (2) a un corps réalisé en une seule pièce obtenue avec la technologie de fabrication additive et comprend un complexe de labyrinthes de passages (20, 21) pour l'air et le liquide de refroidissement ; et
- le corps de l'échangeur de chaleur (2) est réalisé en une seule pièce également avec le corps dudit collecteur d'admission (3), lesdits labyrinthes de passages (20, 21) pour l'air et le liquide de refroidissement ayant une portion (22) qui s'étend dans une partie dudit collecteur d'admission (3) en amont, en référence à la direction du flux d'air, d'un plan théorique (23) à l'extrémité d'entrée de l'échangeur de chaleur (2),
de sorte que le volume occupé par le collecteur d'admission (3) est en partie également utilisé pour augmenter à l'intérieur de celui-ci le volume occupé par les labyrinthes de passages à la fois pour l'air et le liquide de refroidissement, de manière à augmenter l'échange de chaleur,
dans lequel également ledit collecteur de sortie (4) a un corps réalisé en une seule pièce avec le corps dudit échangeur de chaleur (2), et
dans lequel à l'intérieur du collecteur de sortie (4) ou en amont de celui-ci, mais en aval de l'échangeur de chaleur susmentionné (2), un autre échangeur de chaleur est fourni qui fonctionne avec un liquide de refroidissement différent, ou avec le même fluide mais à un niveau thermique différent, constitué d'un corps réalisé en une seule pièce avec ledit collecteur de sortie, avec l'échangeur de chaleur principal (2), et avec le collecteur d'admission (3).

2. Système de collecteur d'admission selon la revendication 1, **caractérisé en ce que** le corps de l'échangeur de chaleur (2) a une configuration destinée à définir le complexe susmentionné de labyrinthes de passages (20, 21), sous forme d'une configuration en treillis ou maillée d'éléments tubulaires ou de surfaces du type aérodynamique, ou sous forme d'une surface triplement périodique du type gyroïde.

3. Système de collecteur d'admission selon la revendication 1, **caractérisé en ce que** le corps susmentionné réalisé en une seule pièce de l'échangeur de chaleur (2) et du collecteur d'admission (3) est réalisé en matériau métallique, tel que l'aluminium ou le cuivre, ou en matière plastique ou en matériau composite, comprenant une matrice renforcée de fibres synthétiques, ou en matière plastique comprenant des poudres métalliques.

4. Système de collecteur d'admission selon la revendication 2, **caractérisé en ce que** le corps de l'échangeur de chaleur définit des passages dont la forme et/ou la géométrie varie/varient le long de la dimension longitudinale de chaque passage, pour optimiser de manière progressive et calibrée l'échange de chaleur le long du collecteur d'admission (3) et de l'échangeur de chaleur (2) et le long de chaque autre échangeur de chaleur.

5. Système de collecteur d'admission selon la revendication 4, **caractérisé en ce que** les passages ont des parois dont l'épaisseur varie le long de la dimension longitudinale de chaque passage.

6. Utilisation du système de collecteur d'admission selon la revendication 1, **caractérisée en ce que** ledit échangeur de chaleur (2) est refroidi par un liquide de refroidissement du moteur à combustion interne, qui circule dans un circuit secondaire du système de refroidissement du moteur à combustion interne.

7. Utilisation du système de collecteur d'admission selon la revendication 1, **caractérisée en ce que** ledit échangeur de chaleur (2) est refroidi avec un liquide de refroidissement qui subit un changement de phase dans l'échangeur de chaleur.
